# EUROPÄISCHE PATENTSCHRIFT

(11) **EP 1 564 341 B1**
(45) Veröffentlichungstag und Bekanntmachung des Hinweises auf die Patenterteilung: **01.01.2014**
(21) Anmeldenummer: 05003109.5
(22) Anmeldetag: 14.02.2005
(51) Int. Cl.: E04C 2/52, F24D 3/16

(54) **Wandelement für ein Gebäude und Verfahren zu dessen Herstellung**
Wall element for a building and method of manufacturing
Elément de paroi pour un bâtiment et procédé de fabrication

(30) Priorität: 16.02.2004 DE 102004007685
(43) Veröffentlichungstag der Anmeldung: 17.08.2005
(73) Patentinhaber: Emma, Gmeiner, 92721 Störnstein (DE)
(72) Erfinder: Gmeiner, Peter, 92721 Störnstein (DE)
(74) Vertreter: Lang, Christian

(56) Entgegenhaltungen:
- WO-A-01/78457
- DE-A- 3 817 573
- DE-A- 19 920 081
- GB-A- 2 265 211
- US-A- 4 945 362

## Beschreibung

Die vorliegende Erfindung betrifft ein Wandelement für ein Gebäude mit einem integrierten elektrischen Flächenheizelement, das in eine wärmeleitende Ausgussmasse eingebettet ist, sowie ein Verfahren zur Herstellung eines derartigen Wandelementes.

Gegenüber herkömmlichen Baustoffen, die zum Bau von Gebäuden verwendet werden, weist der Baustoff Lehm zahlreiche Vorteile auf. Lehm hat die Fähigkeit, die Luftfeuchtigkeit in Räumen in gewissen Grenzen zu regulieren und kann damit ein günstiges Wohnklima erzeugen. Der relativ aufwändigen Verarbeitung von Lehm beim Bau von Häusern kann durch Einsatz vorgefertigter Lehmbauplatten in gewünschter Größe begegnet werden.

Eine derartige Lehmbauplatte ist in der EP 0 128 681 A1 offenbart. Die Platte ist in Sandwich-Bauweise ausgeführt und umfasst zwei äußere Stützmembranen, die aus Fasermaterial bestehen bzw. solches aufweisen. Zwischen diesen Membranschichten befindet sich eine Lehmschicht, die weniger als 20 Gew.-% dehnbare Mineralstoffe aufweist. In der Lehmschicht befindet sich weiteres Fasermaterial, bspw. in Gestalt von Zellulosefasern.

Eine Lehmbauplatte und ein Verfahren zu ihrer Herstellung ist weiterhin aus der DE 40 17 057 A1 bekannt. Diese Lehmbauplatte besteht aus einer lehmgebundenen Kernschicht und beidseitig jeweils einer oberflächlichen Lage aus einem netzähnlichen, reißfesten, fasrigen, aus natürlich wachsenden Fasern hergestellten, textilen Material, das teilweise in den Lehm der Kernschicht eingebettet ist und bei dem der Durchmesser der Fäden mindestens um den Faktor 5 kleiner ist als der Freiraum zwischen benachbarten Fäden.

Die DE 102 17 185 A1 beschreibt eine Lehmbauplatte, die eine Armierung aus Holzwolle aufweist, die kurz- und/oder langfasrig in Wirrlage über den gesamten Körper verteilt sein kann. Das Lehmmaterial kann zudem mit Korkgranulat versetzt sein, wodurch Schwindungserscheinungen bei größeren Flächen kompensiert werden sollen.

Ein günstiges Raumklima wird zudem durch den Einsatz von Wandheizungen ermöglicht, die zusätzlich zu oder anstelle von herkömmlichen Heizradiatoren verwendet werden können.

Die DE 199 20 081 A1 beschreibt ein Wandelement für ein Gebäude mit einem integrierten Kühl- bzw. Heizregister, das über einen Vorlauf und einen Rücklauf mit einem zentralen Temperiersystem verbunden und in eine wärmeleitende Ausgussmasse eingebettet ist. Diese Ausgussmasse wird durch mit Sand, Strohhäcksel und Wasser aufbereiteten Lehm gebildet. In gegenüber liegenden großflächigen Außenflächen des Wandelementes ist jeweils ein Gewebe in die Ausgussmasse eingelegt.

Ein Ziel der vorliegenden Erfindung besteht darin, eine Lehmbauplatte mit einem integrierten Wandheizelement zur Verfügung zu stellen, die einfach aufgebaut ist und die sich kostengünstig herstellen lässt.

Dieses Ziel der Erfindung wird mit dem Gegenstand des unabhängigen Anspruchs 1 erreicht. Merkmale vorteilhafter Weiterbildungen der Erfindung ergeben sich aus den davon abhängigen Ansprüchen. Dem gemäß besteht ein Wandelement für ein Gebäude zumindest teilweise aus einer wärmeleitenden Ausgussmasse. Diese besteht aus Lehm, der mit Sand, Zusatzstoffen und Wasser aufbereitet ist. Als organische Zusatzstoffe kommen insbesondere Stroh oder Pflanzenfasern o. dgl. in Frage. Als anorganische Zusatzstoffe kommen bspw. Mineralstoffe in Granulatform o. dgl. in Frage. Zumindest gegenüber liegende Außenflächen des Wandelements weisen jeweils eine Gewebe- oder Stützmatrix auf, die an den Oberflächen bzw. in oberflächennahen Bereichen in die Ausgussmasse eingelegt ist. Diese Gewebe- oder Stützmatrix kann wahlweise aus einem Gewebe oder Gewirke oder aus unregelmäßig angeordneten, jedoch teilweise untereinander verbundenen Fasern bestehen. Als Fasern kommen wiederum organische, bspw. pflanzliche Fasern oder bspw. Glasfasern o. dgl. in Frage. Wahlweise kann die Stützmatrix auch eine flächige Mattenstruktur mit einer Vielzahl von regelmäßig oder unregelmäßig angeordneten Durchbrüchen aufweisen, so dass eine formschlüssige Verbindung mit der Ausgussmasse aus Lehm gewährleistet ist.

Gemäß vorliegender Erfindung ist in die Ausgussmasse ein elektrisches Heizelement eingebracht, das während der Herstellung der Lehmbauplatte in diese eingelegt wird und vollständig von dem Lehm der Ausgussmasse umschlossen ist. Hierdurch wird ein formschlüssiger Kontakt zwischen dem Heizelement und dem Lehm erreicht, was eine gute Wärmeübertragung zur Folge hat. Das erfindungsgemäße Wandelement lässt sich in Form von Lehmbauplatten problemlos vorfertigen und am vorgesehenen Einsatzort montieren. Die elektrischen Anschlüsse mehrerer derartiger Wandelemente können hierbei miteinander verbunden werden, so dass beheizbare Wandelemente in gewünschter Größe realisierbar sind. Wandelemente, die nicht beheizt werden sollen, können ohne darin eingelegte Heizelemente hergestellt werden.

Das Heizelement kann insbesondere ein Flächenheizelement, bspw. eine elektrische Heizmatte o. dgl. sein. Für das Heizelement kommen insbesondere Widerstandsheizelemente in Frage, die eine Vielzahl von elektrischen Heizfäden, bspw. aus Kupferdraht, Silber- oder Golddraht oder aus Carbonfasern o. dgl. aufweisen. Die Heizfäden können als Litzen miteinander verwebt sein und bspw. in einer Netzstruktur miteinander verbunden sein. Wahlweise kann das Heizelement auch als mäanderförmiges Band gefertigt sein, dass in die Ausgussmasse eingelegt werden kann. Eine weitere alternative Ausgestaltung kann vorsehen, dass das elektrische Heizelement eine flächige Struktur mit einer Vielzahl von darin angeordneten Durchbrüchen aufweist.

Eine alternative Ausführungsform der Erfindung sieht vor, dass das Heizelement durch herkömmliche Heizdrähte aus Kupfer, Silber o. dgl. gebildet wird, die jeweils eine Isolation aufweisen und ggf. in umhüllenden Metallmantelrohren geschoben sein können. So eignen sich bspw. mäanderförmig verlaufende Edelstahl- oder Kupferrohre zur Herstellung vorgefertigter Heizelemente, welche die Heizdrähte bereits in abgelängtem Zustand enthalten und in dieser Form in die Lehmbauplatten eingelegt werden können, bevor diese fertig vergossen werden. Die Mantelrohre bilden gleichzeitig einen hervorragenden mechanischen Schutz gegen Anbohren oder Durchlöchern bei Installationsarbeiten. Gleichzeitig können die Mantelrohre als geerdete Schutzleiter fungieren. Diese vorgefertigten Heizleiter können zudem bereits elektrisch mit einer sog. Übergabedose verbunden werden, so dass modular aufgebaute und verwendbare Lehmbauplatten mit nach außen geführten elektrischen Anschlüssen gebildet werden, die nach dem Einbau lediglich noch elektrisch an eine Versorgungsleitung angeschlossen und/oder untereinander verbunden werden müssen.

Wichtig für die einwandfreie Funktion und für eine stabile Struktur des Wandelements bzw. der Lehmbauplatte ist die gute formschlüssige Verbindung des elektrischen Heizelements mit der Zwischenschicht der Ausgussmasse aus Lehm. Hierzu darf das Heizelement nicht zu voluminös sein, damit es prozentual kein zu großes Volumen an der Zwischenschicht einnimmt. Zudem muss die flächige Struktur eines ausreichende Anzahl von Durchbrüchen aufweisen, die zudem ausreichend groß sein müssen, da andernfalls die Stabilität der Lehmbauplatte beeinträchtigt werden kann.

Eine bevorzugte Ausgestaltung der Erfindung sieht vor, dass zumindest Teile der elektrisch leitenden Metallfäden bzw. Carbonfasern jeweils eine Kunststoffumhüllung aufweisen, die von einem Schutzleiter umhüllt ist, der aus Metallfäden oder aus Carbonfasern besteht. Auf diese Weise können Unfälle aufgrund unerwünschter Leitungsvorgänge in dem Wandelement verhindert werden.

Weiterhin kann es vorteilhaft und sinnvoll sein, in das Wandheizelement eine elektromagnetische Abschirmung zu integrieren. Diese elektromagnetische Abschirmung sollte insbesondere zu den Innenräumen des Gebäudes wirken. Auf einfache Weise kann eine solche Abschirmung durch eine flächige, elektrisch leitende Struktur, bspw. ein elektrisch leitendes Metall- oder Carbongewebe o. dgl. gebildet sein, die weitgehend vollständig in dem Wandelement eingebettet ist. Diese Abschirmstruktur ist vorzugsweise in oberflächennahen Bereichen angeordnet und mit einem Masse- bzw. Erdungspotential verbunden, so dass die dahinter liegend angeordnete Heizstruktur, die typischerweise mit einer Wechselspannung mit einer Frequenz von 50 Hertz betrieben wird, weitgehend keine störenden elektromagnetischen Wellen bzw. Felder mehr emittiert.

Ein weiteres Ziel der Erfindung wird darin gesehen, ein einfaches Verfahren zur Herstellung eines Wandelements gemäß einer der zuvor beschriebenen Ausführungsform zur Verfügung zu stellen.

Dieses weitere Ziel der Erfindung wird mit einem Verfahren gemäß unabhängigem Anspruch 9 erreicht. Dem gemäß wird eine wärmeleitende Ausgussmasse aus Lehm, Sand, organischen oder anorganischen Zusatzstoffen und Wasser gemischt. In eine Negativform des Wandelements wird bodenseitig eine Gewebe- bzw. Stützmatrix eingelegt, wonach eine bestimmte Menge an Ausgussmasse eingefüllt und geglättet wird. In diese Ausgussmasse wird das elektrische Heizelement bzw. das Flächenheizelement eingelegt, wonach die Negativform vollständig aufgefüllt wird. Hierauf wird eine weitere Gewebe- bzw. Stützmatrix aufgelegt und durch das Glätten der Ausgussmasse in diese eingedrückt. Anschließend kann die Ausgussmasse ausgehärtet werden.

Vor dem Einfüllen der Ausgussmasse in die Negativform kann in diese eine bestimmte Menge einer wärmeleitenden Armierungsmasse eingefüllt und bodenseitig gleichmäßig verteilt werden. Eine Ausgestaltung der Erfindung sieht vor, dass die Armierungsmasse durch elektrische Heizelemente, insbesondere durch ein elektrisches Flächenheizelement bzw. eine elektrische Heizmatte gebildet wird.

Bei der Herstellung des erfindungsgemäßen Wandelements kann es von Vorteil sein, wenn das erstmalige Beheizen der Heizelemente zum Tempern, d.h. zum Aushärten sowie zum Durchtrocknen der Wandelemente genutzt wird. Auf diese Weise kann durch gezielte Wärmebeaufschlagung eine gewünschte Härte und ein gewünschter Trocknungsgrad erreicht werden. Zudem kann auf diese Weise der üblicherweise erforderliche längere Zeitraum bis zum Durchtrocknen der Wandelemente deutlich abgekürzt werden, so dass diese in erheblich kürzerer Zeit als üblich einbaufertig zur Verfügung stehen können.

Wenn im vorliegenden Zusammenhang weitgehend von einem Wandelement bzw. von einem Wandheizelement die Rede ist, so ist damit generell auch ein Decken- oder Bodenelement gemeint. Für den Fachmann ist es unmittelbar klar, dass er zur Deckenverkleidung oder zur Bodenbelegung derartige Wandelemente verwenden kann, ohne dass diese hierzu modifiziert werden müssen. Der Schutz der vorliegenden Erfindung erstreckt sich somit auf alle Verkleidungselemente für Gebäudeinnenflächen, welche die erfindungsgemäßen Merkmale aufweisen.

Weitere Vorteile und Ausgestaltungen der vorliegenden Erfindung ergeben sich aus den abhängigen Ansprüchen sowie aus der nachfolgenden Figurenbeschreibung, die bevorzugte Ausführungsbeispiele zeigt.
Fig. 1 zeigt eine schematische Ansicht eines erfindungsgemäßen Wandelements.
Fig. 2 zeigt einen schematischen Aufbau des Wandelements mit darin angeordnetem elektrischem Heizelement.
Fig. 3 zeigt einen schematischen Aufbau eines Heizbandes des elektrischen Heizelements.
Fig. 4 zeigt eine schematische Darstellung einer Variante des elektrischen Heizelements.
Fig. 5 zeigt eine weitere Variante des Heizelements.

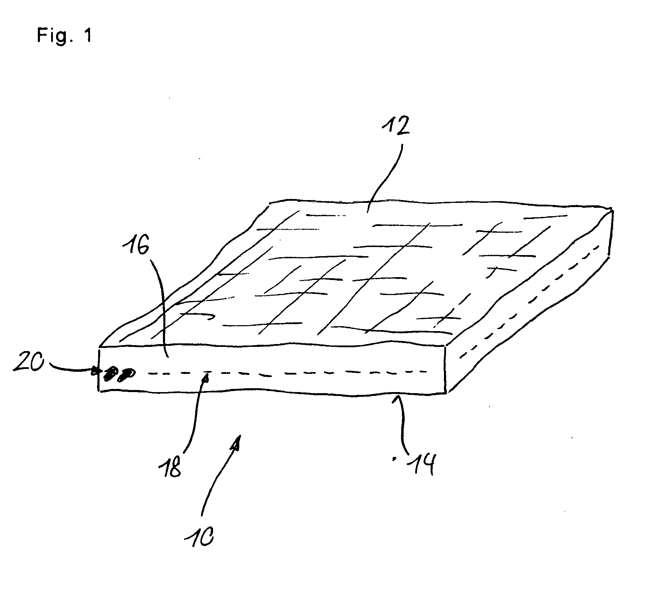

Die schematische Perspektivdarstellung der Fig. 1 zeigt ein flaches Wandelement 10, das bspw. eine Kantenlänge von 0,3 bis 2 Meter oder mehr aufweisen kann. Das Wandelement 10 kann einen rechteckförmigen oder quadratischen Grundriss aufweisen, was in erster Linie von den vorgegebenen Einbauverhältnissen abhängt. Das Wandelement 10 besteht aus Lehm, der mit Wasser, Sand, organischen oder anorganischen Zusatzstoffen und Stützelementen zubereitet und gefertigt ist. Die Stützelemente bestehen vorzugsweise aus Gewebe oder netzähnlichen Material, das jeweils an einer Vorderseite 12 sowie an einer Rückseite 14 flächig in das Wandelement 10 eingearbeitet ist. In einem mittleren Bereich 16 des Wandelements 10 befindet sich gemäß vorliegender Erfindung ein elektrisches Heizelement 18, das anhand der folgenden Figuren näher erläutert wird. Elektrische Anschlüsse 20 sind an einer Schmalseite nach außen geführt. Diese elektrischen Anschlüsse 20 sind vorzugsweise so ausgebildet, dass mehrere derartiger Wandelemente 10 modular aneinander gefügt werden können, wobei gleichzeitig die elektrischen Anschlüsse 20 benachbarter Wandelemente 10 miteinander verbunden werden.

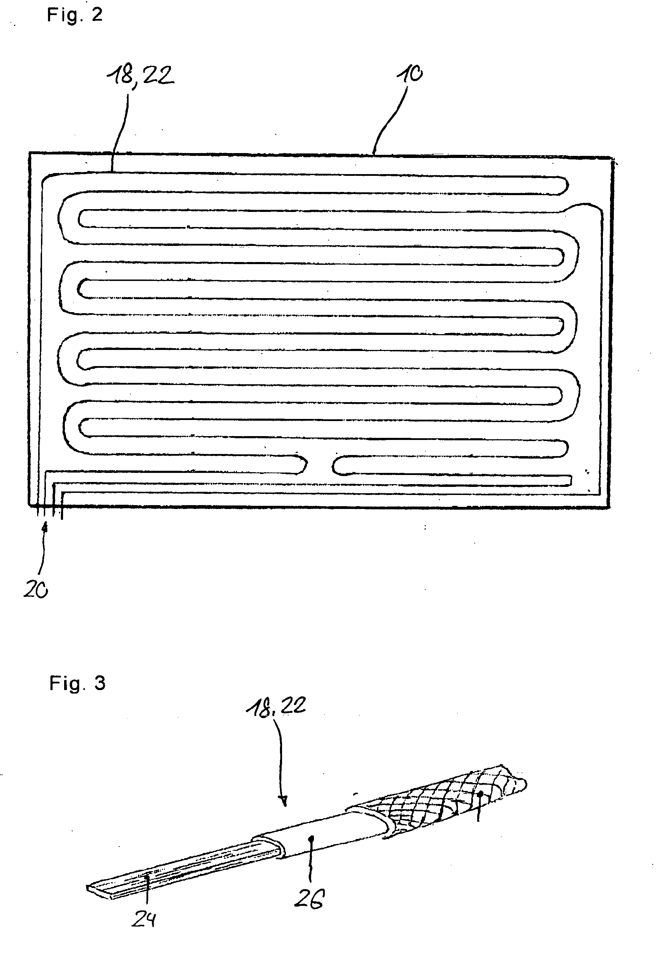

Fig. 2 verdeutlicht eine beispielhafte Anordnung des elektrischen Heizelements 18, das als Widerstandsheizelement ausgebildet ist, das mittels Beaufschlagung mit elektrischem Strom erwärmbar ist. Das Heizelement 18 besteht im gezeigten Ausführungsbeispiel aus zwei Heizbändern 22, die jeweils mäanderförmig und in regelmäßigem Abstand voneinander gleichmäßig über die Fläche des Wandelements 10 verteilt sind.

Fig. 3 verdeutlicht einen beispielhaften Aufbau eines Heizleiters 18, der aus einem Heizband 22 besteht. Das Heizband 22 umfasst ein Kohlefaserband 24, das wahlweise einen runden, einen ovalen oder einen rechteckförmigen Querschnitt aufweisen kann. Im gezeigten Ausführungsbeispiel ist das Kohlefaserband 24 relativ breit und dünn ausgeführt, so dass es flach innerhalb der mittleren Schicht 16 des Wandelements 10 verlegt und eingebettet werden kann. Um das Kohlefaserband 24 ist eine isolierende Kunststoffumhüllung 26 angeordnet, die wiederum von einer weiteren Umhüllung 28 aus Kohlefasergewebe umgeben ist. Die elektrisch leitende Umhüllung 28 dient als Schutzleiter.

Wahlweise kann das Heizband eine metallische Seele und/oder Umhüllung aufweisen. Die Seele und/oder die Umhüllung bestehen vorzugsweise aus einem Gewebe oder Gewirke aus elektrisch leitenden Fäden bzw. Drähten aus Carbonfasern oder Metall.

Alternativ kann das Heizelement 18 eine Reihe von Heizfäden aufweisen, die wahlweise in netzartiger, mäanderförmiger oder linearer, jeweils paralleler Struktur in das Wandelement 10 eingearbeitet sein können. Das Heizelement 18 kann insbesondere eine netzartige Heizmatte o. dgl. sein, die in die Lehmbauplatte eingebettet ist und damit formschlüssig mit dieser verbunden ist.

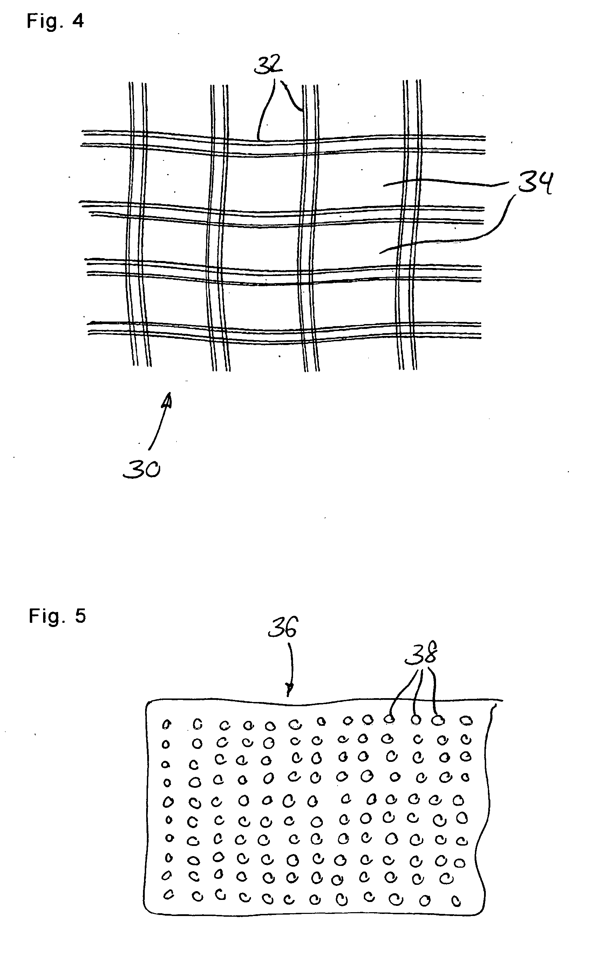

Fig. 4 zeigt ein Ausführungsbeispiel eines Heizelements 18, bei dem eine Netzstruktur 30 mit einer Vielzahl von feinen Litzen 32 versehen ist, die bspw. aus Kupfer-, Silber- oder Golddraht oder wahlweise auch aus Carbonfasern bestehen können. Insbesondere ein Carbonheizleiter weist günstige Wärmeübertragungseigenschaften auf und kann sehr dünn und kompakt ausgeführt sein. Die Litzen 32 sind vorzugsweise mit der stützenden Netzstruktur 30 verwebt bzw. verdrillt. Die Netzstruktur 30 kann aus Naturfasern oder aus Kunstfasern bestehen bzw. Kunststofffäden aufweisen. Die relativ großen Zwischenräume 34 in der Netzstruktur 30 ermöglichen beim Vergießen der Ausgussmasse deren leichtes Fließen, so dass eine gute, formschlüssige Verbindung entsteht.

Fig. 5 verdeutlicht schließlich ein weiteres alternatives Ausführungsbeispiel des elektrischen Heizelements 18, das hier als flächige Heizmatte 36 ausgebildet ist, die eine Vielzahl von Durchbrüchen 38 aufweist, durch welche die Ausgussmasse hindurch fließen kann. Die Heizmatte 36 kann wahlweise aus elektrisch leitfähigem Kunststoff bestehen oder eine Vielzahl von in eine Kunststofffolie oder -matte eingearbeitete Heizdrähten bzw. Carbonfasern aufweisen. Die Eckbereiche der Heizmatte 36 können ggf. mit Aussparungen (nicht dargestellt) versehen sein, damit Schraubbefestigungen, mit denen das Wandelement befestigt wird, nicht durch die Heizmatte 36 hindurch dringen und bspw. zu elektrischen Kurzschlüssen führen können.

Insbesondere das Heizelement 18 in der Ausgestaltung als Heizmatte 36 gemäß Fig. 5 ist geeignet, als stützende Matrix bzw. als Armierung für den mittleren Bereich 16 der Lehmbauplatte zu dienen, da die Heizmatte 36 je nach gewählter Dicke und gewähltem Material eine ausreichende Stabilität aufweisen kann, um dem Wandelement 10 zusätzliche Stabilität zu verleihen. Die Anzahl der Durchbrüche 38 sowie deren prozentualer Flächenanteil haben dabei sowohl einen Einfluss auf die Stabilität der Platte als auch auf die Güte der formschlüssigen Verbindung mit der Ausgussmasse.

Eine alternative Ausführungsform der Erfindung sieht vor, dass das Heizelement 18 durch herkömmliche Heizdrähte aus Kupfer, Silber o. dgl. gebildet wird, die jeweils eine Isolation aufweisen und ggf. in umhüllenden Metallmantelrohren geschoben sein können. So eignen sich bspw. mäanderförmig verlaufende Edelstahl- oder Kupferrohre mit einem Durchmesser von ca. 4 bis 8 mm zur Herstellung vorgefertigter Heizelemente 18, welche die Heizdrähte bereits in abgelängtem Zustand enthalten und in dieser Form in die Lehmbauplatten eingelegt werden können, bevor diese fertig vergossen werden. Die mäanderförmig verlaufenden Heizdrähte können wahlweise auch einen deutlich größeren Abstand voneinander aufweisen als dies in Fig. 2 beispielhaft dargestellt ist.

Die Mantelrohre bilden gleichzeitig einen hervorragenden mechanischen Schutz gegen Anbohren oder Durchlöchern bei Installationsarbeiten. Gleichzeitig können die Mantelrohre als geerdete Schutzleiter fungieren. Diese vorgefertigten Heizleiter können zudem bereits elektrisch mit einer sog. Übergabedose verbunden werden, so dass modular aufgebaute und verwendbare Lehmbauplatten mit nach außen geführten elektrischen Anschlüssen gebildet werden, die nach dem Einbau lediglich noch elektrisch an eine Versorgungsleitung angeschlossen und/oder untereinander verbunden werden müssen.

In den beschriebenen Ausführungsbeispielen wurden nicht alle denkbaren Varianten und Abwandlungen dargestellt. Für den Fachmann versteht sich von selbst, dass er als Heizleiter grundsätzlich alle denkbaren, für diesen Zweck geeignete Materialien verwenden kann.

In den Ausführungsbeispielen wurde zudem auf die Darstellung der erwähnten, optionalen elektromagnetischen Abschirmung der Flächenheizelemente verzichtet. Da diese üblicherweise mit einer Wechselspannung von bspw. 230 Volt und einer Netzfrequenz von 50 Hertz betrieben werden, entsteht elektromagnetische Strahlung, die für die Bewohner eines Hauses unerwünscht und störend sein kann. Eine zusätzliche Abschirmung bzw. Armierung mit einem Metallgitter oder einer andersartigen, elektrisch leitenden Abschirmstruktur kann für eine Abschirmung dieser störenden Strahlung sorgen. Die Armierung bzw. die Abschirmstruktur ist vorzugsweise mit einem Erdungs- oder Massepotential elektrisch leitend verbunden. Grundsätzlich kann es ausreichen, die Abschirmung in oberflächennahen Bereichen des Wandelements anzuordnen bzw. einzubetten, die zur Rauminnenseite hin gerichtet sind. Ggf. können jedoch beide Außenflächen eines Wandelements jeweils mit einer abschirmenden Struktur versehen sein.

Die Beschreibung der obigen Ausführungsbeispiele sind keinesfalls einschränkend, sondern lediglich beispielhaft zu verstehen. Für den Fachmann erschließen sich daraus eine Vielzahl von Abwandlungen und Varianten, die ebenfalls in den Schutzumfang der Ansprüche fallen.

## Patentansprüche

1. Wandelement für ein Gebäude, zumindest teilweise bestehend aus einer Wärme leitenden Ausgussmasse in Form von mit Sand, Zusatzstoffen und Wasser aufbereitetem Lehm, wobei zumindest gegenüber liegende Außenflächen des Wandelementes jeweils eine Gewebe- oder Stützmatrix aufweisen, die an den Oberflächen bzw in Oberflächennähe in die Ausgussmasse eingelegt ist, **dadurch gekennzeichnet, dass** das Wandelement (10) ein integriertes elektrisches Heizelement (18) aufweist.

2. Wandelement nach Anspruch 1, **dadurch gekennzeichnet, dass** das elektrische Heizelement (18) in einer Zwischenschicht (16) aus Lehm angeordnet und/oder formschlüssig eingebettet ist.

3. Wandelement nach Anspruch 1 oder 2, **dadurch gekennzeichnet, dass** das elektrische Heizelement (18) ein Flächenheizelement ist.

4. Wandelement nach einem der voranstehenden Ansprüche, **dadurch gekennzeichnet, dass** das elektrische Heizelement (18) ein Gewebe mit darin angeordneten, elektrisch leitfähigen Heizfäden aufweist.

5. Wandelement nach einem der voranstehenden Ansprüche, **dadurch gekennzeichnet, dass** das elektrische Heizelement (18) elektrisch leitfähige Carbonfasern und/oder elektrisch leitfähige Metallfäden oder -fasern aufweist.

6. Wandelement nach einem der voranstehenden Ansprüche, **dadurch gekennzeichnet, dass** zumindest Teile der elektrisch leitenden Metallfäden bzw. Carbonfasern jeweils eine Kunststoffumhüllung (26) und einen um diesen angeordneten metallischen oder aus Carbonfasern bestehenden Schutzleiter aufweisen.

7. Wandelement nach einem der voranstehenden Ansprüche, **gekennzeichnet durch** eine elektromagnetische Abschirmung des elektrischen Heizelements (18) nach außen, insbesondere zur Rauminnenseite hin.

8. Wandelement nach Anspruch 7, **dadurch gekennzeichnet, dass** die elektromagnetische Abschirmung durch wenigstens eine flächige, elektrisch leitende Struktur gebildet ist, die mit einem Erdungspotential verbunden ist.

9. Verfahren zur Herstellung eines Wandelementes (10) für ein Gebäude mit einem integrierten elektrischen Heizelement (18), bei dem eine Wärme leitende Ausgussmasse aus Lehm, Sand, Zusatzstoffen und Wasser gemischt wird, in eine Negativform des Wandelementes bodenseitig eine Gewebe- bzw. Stützmatrix eingelegt wird, anschließend eine bestimmte Menge der Ausgussmasse eingefüllt und geglättet wird, in diese Ausgussmasse das Heizelement (18) eingelegt wird, nach dem vollständigen Auffüllen der Negativform mit der Ausgussmasse darauf eine weitere Gewebe- bzw. Stützmatrix aufgelegt und durch das Glätten der Ausgussmasse in dieselbe eingedrückt wird und die Ausgussmasse ausgehärtet wird.

10. Verfahren nach Anspruch 9, bei dem vor dem Einfüllen der Ausgussmasse in die Negativform eine bestimmte Menge einer wärmeleitenden Armierungsmasse eingefüllt und bodenseitig gleichmäßig verteilt wird.

## Claims

1. Wall panel for a building, at least partially consisting of a heat conducting casting compound in the form of clay prepared with sand, additives and water, wherein at least each of the opposing external surfaces of the wall panel has a fabric or support matrix, which is placed at or close to the surface into the casting compound, **characterised by** the fact that the wall panel (10) has an integrated electrical heating element (18).

2. Wall panel in accordance with claim 1 **characterised by** the fact that the electrical heating element (18) is disposed and/or embedded in a positive-locking manner in an intermediate layer (16) of clay.

3. Wall panel in accordance with claim 1 or 2, **characterised by** the fact that the electrical heating element (18) is a flat heating element.

4. Wall panel in accordance with any of the previous claims, **characterised by** the fact that the electrical heating element (18) has a fabric with electrically conducting heating filaments disposed therein.

5. Wall panel in accordance with any of the previous claims, **characterised by** the fact that the electrical heating element (18) has electrically conducting carbon fibres and/or electrically conducting metal filaments or fibres.

6. Wall panel in accordance with any of the previous claims, **characterised by** the fact that at least parts of the electrically conducting metal filaments or carbon fibres each have a plastic sheath (26) around which is arranged a protective conductor made from metal or carbon fibres.

7. Wall panel in accordance with any of the previous claims, **characterised by** electromagnetic shielding of the electrical heating element (18) to the outside, in particular towards the interior of a room.

8. Wall panel in accordance with claim 7, **characterised by** the fact that the electromagnetic shielding is formed by at least a flat, electrically conducting structure, which is connected to a ground potential.

9. A method for producing a wall panel (10) for a building with an integrated electric heating element (18), wherein a heat-conducting casting compound of clay, sand, additives and water is mixed, a fabric or support matrix is inserted into the bottom of a negative mould of the wall panel, a certain amount of the casting compound is filled in and smoothed, the heating element (18) is placed in the said casting compound, the negative mould is completely filled with the casting compound and another fabric or support matrix is then applied on top and, through smoothing of the casting compound, is pressed into same, and the casting compound is cured.

10. Method in accordance with claim 9, wherein, before the casting compound is filled into the negative mould, a quantity of a heat-conducting reinforcement material is filled in and distributed evenly over the bottom.

## Revendications

1. Elément mural pour un bâtiment, composé au moins partiellement d'une masse de moulage sous forme d'argile préparée avec du sable, des agrégats et de l'eau, cependant qu'au moins des surfaces extérieures opposées de l'élément mural présentent respectivement une matrice de tissu ou de support qui est insérée dans la masse de moulage sur les surfaces ou à proximité des surfaces, **caractérisé en ce que** l'élément mural (10) présente un élément chauffant électrique intégré (18).

2. Elément mural selon la revendication 1, **caractérisé en ce que** l'élément chauffant électrique (18) est placé et/ou encastré de manière crabotée dans une couche intermédiaire (16) en argile.

3. Elément mural selon la revendication 1 ou 2, **caractérisé en ce que** l'élément chauffant électrique (18) est un élément chauffant plat.

4. Elément mural selon l'une des revendications précédentes, **caractérisé en ce que** l'élément chauffant électrique (18) présente un tissu avec des filaments chauffants conducteurs d'électricité placés à l'intérieur.

5. Elément mural selon l'une des revendications précédentes, **caractérisé en ce que** l'élément chauffant électrique (18) présente des fibres de carbone conductrices d'électricité et/ou des fils ou des fibres métalliques conductrices d'électricité.

6. Elément mural selon l'une des revendications précédentes, **caractérisé en ce qu'**au moins des parties des fils métalliques ou des fibres de carbone conductrices d'électricité présentent respectivement une enveloppe en matière plastique (26) et un conducteur de protection métallique ou en fibres de carbone placé autour de celles-ci.

7. Elément mural selon l'une des revendications précédentes, **caractérisé par** un blindage électromagnétique de l'élément chauffant électrique (18) vers l'extérieur, en particulier vers le côté intérieur de la pièce.

8. Elément mural selon la revendication 7, **caractérisé en ce que** le blindage électromagnétique est formé par au moins une structure plate conductrice d'électricité qui est relié au potentiel de mise à la terre.

9. Procédé de fabrication d'un élément mural (10) pour un bâtiment avec un élément chauffant électrique intégré (18) pour lequel une masse de moulage qui conduit la chaleur est mélangée à partir d'argile, de sable, d'agrégats ou d'eau, qu'une matrice de tissu ou de support est insérée dans un moule négatif de l'élément mural sur le côté du sol, qu'ensuite une certaine quantité de la masse de moulage est remplie et lissée, que l'élément chauffant (18) est inséré dans la masse de moulage, qu'une autre matrice de tissu ou de support est posée dessus après remplissage complet du moule négatif avec la masse de moulage et qu'elle est enfoncée dans la masse de moulage par lissage de celle-ci et que la masse de moulage est durcie.

10. Procédé selon la revendication 9 pour lequel une certaine quantité d'une masse d'armature qui conduit la chaleur est remplie et répartie uniformément sur le côté du sol avant le remplissage de la mousse de moulage dans le moule négatif.
